(19) Europäisches Patentamt / European Patent Office / Office européen des brevets

(11) **EP 4 776 307 A1**

(12) **EUROPEAN PATENT APPLICATION**

(43) Date of publication:
**15.07.2026 Bulletin 2026/29**

(21) Application number: 25151350.3

(22) Date of filing: **10.01.2025**

(51) International Patent Classification (IPC):
**G21C 1/22** *(2006.01)*       **G21C 3/54** *(2006.01)*
**G21C 11/06** *(2006.01)*

(52) Cooperative Patent Classification (CPC):
**G21C 1/22; G21C 3/322; G21C 3/54; G21C 5/14;**
G21C 11/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Saltfoss Energy ApS
2200 Copenhagen (DK)**

(72) Inventor: **BURES, Lubomír
2200 Copenhagen (DK)**

(74) Representative: **Meissner Bolte Partnerschaft
mbB
Patentanwälte Rechtsanwälte
Postfach 86 06 24
81633 München (DE)**

(54) **A MOLTEN SALT REACTOR**

(57)     The present invention relates to a molten salt reactor comprising a core comprising an assembly of graphite moderator elements, the core dimensions are defined by: - the core height, defined as the height of the assembly of the graphite moderator elements, and - the core breadth, defined as the equivalent diameter of the outline of the assembly of graphite moderator elements taken perpendicular to the height direction and - the ratio of the core breadth to the core height has a value in the interval of 2.0 to 6.0, such as 2.2 to 5.5, such as 2.5 to 5.0, such as 2.8 to 4.0, and wherein the assembly of the graphite moderator elements comprises graphite moderator elements arranged with interstices between the outer surfaces of the graphite moderator elements, and wherein a molten salt is capable of flowing between the outer surfaces of the graphite moderator elements.

Figure 1

## Description

### Field of the invention

The present invention relates to a molten salt reactor (MSR) having a graphite moderator in the reactor core where a molten fuel salt comprising fissile material is flowing through openings in the graphite moderator. The MSR according to the invention provides a compact reactor core with an improved lifetime of the graphite. The present invention furthermore relates to a method of operating such a molten salt reactor. The present invention furthermore relates to nuclear power barge or a nuclear fission propelled ship comprising such a molten salt reactor.

### Background of the invention

Molten salt reactors (MSRs) are based on a critical concentration of a fissile material dissolved in a molten salt. The molten salt comprising the fissile material is commonly referred to as the fuel salt or molten fuel salt. Research was conducted on MSRs initially at the Oak Ridge National Laboratory (ORNL) in the 1950's and 1960's but is yet to be successfully commercialised. MSRs have several advantages over other reactor types, including those being in commercial use nowadays. MSRs are capable of breeding fissile U-233 from thorium, of producing much lower levels of transuranic actinide waste than uranium/plutonium fuelled reactors; capable of operating at high temperatures, capable of avoiding accumulation of volatile radioactive fission products in solid fuel rods and capable of utilising larger amounts of fissile material than is possible in conventional reactors. Other particular attractive features of an MSR are the operation at ambient or low pressure and the retention of the fission products as strongly bonded salts which is conventionally either fluoride salts or chloride salts.

A reactor core for a fission process maintains the fission process due to the creation of neutrons from fission events inside the core. The neutrons that are created but do not encounter a fissile isotope such as U-235 in the core escape the reactor core and/or is absorbed by structural materials and is lost for aiding the fission process to proceed. The leak of neutrons is strongly dependent on the geometry of the core where the magnitude of the ratio of the surface area of the reactor core to the volume of the reactor core is important to minimise. A sphere, cube or cylinder with equal height/diameter values provide the best solution to avoid neutron leakage because of a low surface area to volume ratio for these core shapes. When operating or designing a thermal neutron reactor where the created neutrons are moderated from very high velocities to thermal velocities, the moderator material is present in the core close to the fissile material and the shape of the moderator more or less follows the shape of the core. The temperatures for a solid moderator may be very high in the centre of the solid moderator due to the high neutron flux for the same geometrical reasons as for the neutron leakage for a sphere, cube and cylinder shape. This may create both large strains of the moderator due to temperature variations and high absolute temperature detrimental to the moderator material.

### Graphite moderated nuclear reactor cores

Graphite is a conventional choice of moderator material for an MSR and was used for the first MSR from the 1960s, the MSRE (Molten-Salt Reactor Experiment) at Oak Ridge National Laboratory (ORNL), "EXPERIENCE WITH THE MOLTEN-SALT REACTOR EXPERIMENT", Haubenreich et al., NUCLEAR APPLICATIONS & TECHNOLOGY VOL. 8 FEBRUARY 1970. The MSRE had a graphite core assembled from graphite blocks or elements. The primary issue with a graphite core with an approximated sphere/cube/cylinder shape is an that it gives rise to the centre graphite blocks having a much shorter lifetime due to the high neutron fluence. Furthermore, the graphite blocks of the core may have an excessive height for a large MSR that must produce more than a few 100 MW of thermal power and with a commercially viable lifetime. The height of the graphite core introduces the need for axial joining of graphite blocks as well as a significant length of control rods and control rod guide tubes that are situated into the graphite assembly from the top.

The lifetime of a molten salt reactor moderated with graphite is conventionally given by the graphite lifetime. The lifetime is the point in time from criticality start to the point in time where the structural integrity of the graphite starts to be lost due to irradiation. The graphite lifetime is given by the accumulated fast neutron fluence, where fast neutrons have energies of several 100 keV. The effect of the fast neutrons on lifetime increases typically with increasing temperature and the deterioration of graphite can be seen as a mechanism caused by fast neutron bombardment assisted by high temperatures. The temperature increase in the graphite due to the fission process is therefore a concern and a lot of effort to increase the lifetime of an MSR with a graphite core have been done with a focus on solutions that decrease the temperature in the graphite by removing the heat.

The flowing molten salt through the graphite core carries heat from the entire core further on via intermediate molten salt loops to e.g. a steam generator for producing electricity. The molten salt flow is conventionally in direct contact with the graphite surfaces or flows in liners or pipes near the graphite surfaces. This is because the moderator must be near the fissile material in the molten salt to provide a proper moderation of the neutron velocity to thermal velocities. The heat in the graphite is in this way removed by the flowing molten salt. There are two basic ways that the molten salt can flow through a graphite core: 1) Channels. The graphite blocks are provided with channels through which the graphite flows. 2) Interstices. The outer surfaces of the graphite blocks or elements is the contact surface for the flowing molten salt; an example is the MSRE.

The stability of a nuclear fission reactor is determined by reactivity feedbacks such as for example the respond to a temperature increase. The reactivity coefficient characterises these feedbacks. The reactivity coefficient depends on the volume of fuel relative to the volume of moderator for a thermal MSR relying on moderated, thermal neutrons. Most of the volume in a molten salt reactor must be occupied by graphite such as in the order of 90% or more to achieve a negative reactivity coefficient for a moderated MSR using a fuel salt such as LEU (low-enriched uranium). This means that there cannot be an arbitrary high molten salt volume present in the core relative to the graphite to provide the heat transfer from the graphite to the flowing molten salt.

The heat transfer from the graphite to the molten salt is more efficient when the salt flow is in the turbulent flow regime and not in the laminar flow regime. This is a general observation for flowing fluids in contact with another material. Another aspect of the general concept of a liquid flowing in a confined space such as a channel or interstice (an internal flow) is the thermal entrance length. The thermal entrance length is the length from the inlet of flow until the point in e.g. a channel where the temperature profile converges. The thermal entrance length value depends on the properties of the liquid material and the Reynolds number.

The Reynolds number is calculated as $Re = (\rho * V * D_H)/\mu$ where:

$\rho$ : the density of the fluid, V: the flow speed, $D_H$: the characteristic dimension, in our case 2x interstice width, $\mu$: dynamic viscosity of the fluid. The flow regimes of a flowing liquid is characterised by the Reynolds number value and a Re < 2000 typically denotes a laminar flow, a Re > 4000 typically denotes a turbulent flow.

In the interval of 2000 < Re < 4000, the flow is denoted to be transitional having somewhat both a laminar and turbulent characteristic.

In the interstitial design, the turbulent flow is only achievable for some molten fuel salt compositions with a higher flow velocity compared to a channel design with the same fuel salt volume-% fraction, where the channel design easily adapts a turbulent flow. The channel size in a reactor with a low fuel salt volume-% fraction may be too small to sustain turbulent flow unless a high pump pressure and high flow velocity has been chosen for the reactor design. High pump pressures and high velocity are demanding for the mechanical parts of the pump and the pipes.

A high pressure of the salt on the graphite due to e.g. a high pump pressure may cause intrusion of the molten salt into the graphite. Graphite is a porous material, and the reactor grade graphite IG-110 graphite has a 21 % porosity as an example. The intruded molten salt can cause hot spots because of stagnant fuel salt that results in fission where the heat is not properly transported away by flow of molten salt. Besides the porosity of the graphite, any axial joints between graphite blocks in the height in the assembly of graphite elements are potential sites for molten salt intrusion.

It should be mentioned that other moderator materials have also been considered instead of graphite and a selected list is given here: Beryllium. A solid moderator that has been used in for example the ARE (Aircraft Reactor Experiment), a molten salt reactor. Beryllium is a scarce resource with a production of a few hundred tons per year and is furthermore very toxic. Water /heavy water. A liquid moderator that is used for the most abundant reactor type, the LWR (light water reactor) and in the CANDU (CANadian Deuterium Uranium), a heavy water moderated reactor. Water or heavy water are good moderators but is rarely suggested in molten salt reactor designs because of the high temperatures of the molten salts ranging from 500-600°C and upwards. These temperatures imply high pressures for the water to remain a liquid or other solutions for maintaining the liquid state. Sodium hydroxide. A liquid moderator above 318°C that has been suggested as a good moderator, but molten hydroxide salts are corrosive and imply a high neutron capture cross section that demands an enrichment like high-assay low enriched uranium (HALEU) when U-235 is used as the fissile material.

"Three Region Core Design for 200 MW electric Molten Salt Reactor with Thorium Uranium Fuel" by Mitachi et al, NUCLEAR TECHNOLOGY VOL. 158 JUNE 2007, disclose a channel type graphite core. The ratio between the diameter of the cylindrical graphite reactor core and the height is stated as 6.0 m to 2.2 m equal to 2.7, where the reactor core is divided into three zones, Core 1, Core 2 and Core 3.

"A new structure design to extend graphite assembly lifespan in small modular molten salt reactors", Wang et al, Int J Energy Res. 2021;45:12247-12257, disclose a graphite assembly structure for an MSR (molten salt reactor) and summarises data from eight previous MSRs with graphite cores having an output of several hundreds of MW thermal power. The document presents calculations where a graphite element (denoted HPA) of the assembly being a column with a hexagonal cross section and an interstitial type to have a better lifespan.

"Basic dynamics of graphite moderated LEU fueled MSRs" by Ondřej Chvála, University of Tennessee Knoxville seminar, December 10th, 2014, and "Temperature-reactivity feedbacks of graphite moderated LEU fueled MSRs" by Ondřej Chvála, University of Tennessee Knoxville seminar, May 2nd 2014, disclose that a small core size promotes negative fuel temperature reactivity coefficients. The disclosed cores all have a breadth to height ratio of 1.0.

**Summary of the invention**

It was an object of the present invention to improve the graphite lifetime of a graphite moderated molten salt reactor.

It was an object of the present invention to provide a more compact graphite moderated molten salt reactor core.

In accordance with an aspect of the invention, there is provided a molten salt reactor comprising a core comprising an assembly of graphite moderator elements, the core dimensions are defined by: - the core height, defined as the height of the assembly of the graphite moderator elements, and - the core breadth, defined as the equivalent diameter of the outline of the assembly of graphite moderator elements taken perpendicular to the height direction and - the ratio of the core breadth to the core height has a value in the interval of 2.0 to 6.0, such as 2.2 to 5.5, such as 2.5 to 5.0, such as 2.8 to 4.0, and wherein the assembly of the graphite moderator elements comprises graphite moderator elements arranged with interstices between the outer surfaces of the graphite moderator elements, and wherein a molten salt is capable of flowing between the outer surfaces of the graphite moderator elements.

In accordance with another aspect of the invention, there is provided a method of operating such a molten salt reactor.

In accordance with another aspect of the invention, there is provided a nuclear power barge comprising such a molten salt reactor.

Detailed Description

The molten salt reactor comprises a core comprising an assembly of graphite moderator elements, the core dimensions are defined by: - the core height, defined as the height of the assembly of the graphite moderator elements, and - the core breadth, defined as the equivalent diameter of the outline of the assembly of graphite moderator elements taken perpendicular to the height direction and - the ratio of the core breadth to the core height has a value in the interval of 2.0 to 6.0, such as 2.2 to 5.5, such as 2.5 to 5.0, such as 2.8 to 4.0, and wherein the assembly of the graphite moderator elements comprises graphite moderator elements arranged with interstices between the outer surfaces of the graphite moderator elements, and wherein a molten salt is capable of flowing between the outer surfaces of the graphite moderator elements.

We find that such an MSR has numerous advantages. The relatively flat reactor core is unusual and against the prejudice that a reactor core should be approximated to the ideal spherically symmetrical shape to avoid neutron losses out of the core for the fission reaction to take place. The design of a high ratio between the breadth and height of the reactor core shows up to result in that a higher fraction volume-% of molten salt can be used in the core while still maintaining a negative reactivity coefficient. This result can be used in various ways such as to increase the surface area of graphite in contact with the flowing molten salt by using more graphite moderator elements with smaller widths. The smaller graphite width provides a better cooling of each individual graphite moderator element in the core which again results in a longer lifetime of the graphite moderator. The surprising result of a higher achievable fraction volume-% of molten salt for a flat reactor core can also be exploited for the utilisation of molten fuel salt compositions that are known to be unfavourable for neutronics reasons, such as compositions comprising Na-23, but possess other advantages in terms of safety or availability and this can be combined with the above-mentioned improved graphite moderator lifetime. Still other ways to utilise the higher achievable fraction volume-% of molten salt for a flat reactor core is to adopt a laminar flow of the molten salt through the core, especially in combination with the smaller achievable graphite moderator widths. Although a laminar flow is thought to provide a smaller cooling effect than a turbulent flow, this is more than compensated by the role of the thermal entrance length and the larger achievable graphite moderator surface providing a better cooling. Consequently, the requirements for the molten fuel salt pump to provide a high pump pressure to give a turbulent flow can be dispensed with. The lower pump pressure of the molten salt also positively influences the risk of salt intrusion into the porous graphite structure.

Another factor that positively influences the risk of salt intrusion into the porous graphite structure is the mere fact that the hydrostatic pressure of the molten salt inside a flat core is lower than for a high core. Yet another advantage is that the amount of moderator graphite needed in the reactor core according to the invention for a given reactor power output during the lifetime is less than for a conventional reactor core. This results in a lower graphite material cost of the reactor core and a lower amount of radioactive waste from the irradiated graphite when decommissioning the molten salt reactor.

The relatively flat reactor core also allows a potentially simpler mechanical design. The height of graphite elements with a nuclear grade quality is somewhat limited to a maximum of around 2 m. A conventional reactor core providing several hundred megawatts is higher than 2 m and requires graphite joints which is problematic due to salt intrusion into these joints. The lower height also enables the use of shorter control rods and the accompanying control rod housing on top of the reactor core for the control rods when they are pulled out of the reactor core.

**The molten salt reactor**

In one embodiment, the molten salt reactor comprises a core comprising an assembly of graphite moderator elements, the core dimensions are defined by: - the core height, defined as the height of the assembly of the graphite moderator elements, and - the core breadth, defined as the equivalent diameter of the outline of the assembly of graphite moderator elements taken perpendicular to the height direction and - the ratio of the core breadth to the core height has a value in the interval of 2.0 to 6.0, such as 2.2 to 5.5, such as 2.5 to 5.0, such as 2.8 to 4.0, and wherein the assembly of the graphite moderator elements comprises graphite moderator elements arranged with interstices between the outer surfaces of the graphite moderator elements, and wherein a molten salt is capable of flowing between the outer surfaces of the graphite moderator elements..

In one embodiment, the graphite moderator element is an elongated element.

The core height is defined as the height of the assembly of the graphite moderator elements. The height of the assembly is the average value of the heights of the graphite moderator elements in the assembly.

The core breadth is defined by the "equivalent diameter" which is a conventional measure used for a noncircular cross section or outline of an object. It denotes the diameter of a circular cross section having the same area as the noncircular cross section. The equivalent diameter can be calculated as $D_{eq} = (4*A/\pi)^{1/2}$, where A is the cross-sectional area of the object.

The equivalent diameter of a circular shaped outline is the diameter D of the circle:

Circle:

$$D_{eq} = (4*\pi*r^2/\pi)^{1/2} = 2*r = D.$$

Other examples are:

Square: $D_{eq} = (4*a^2/\pi)^{1/2} = 2*a/\pi^{1/2}$; a is the square side.

Ellipse: $D_{eq} = (4*\pi*a*b/\pi)^{1/2} = 2*(a*b)^{1/2}$; a and b are the minor and major axes of the ellipse.

The reactor core may have an outline that is not a perfect circle, hexagon, square, or ellipse. A reactor core may comprise graphite moderator elements where the elements are elongated objects in the axial height direction with a polygon cross section horizontal to the height direction, such as a hexagonal cross section. The outline of the assembly of such a reactor core is given by the outline of the outermost elements. This may be a ragged outline and the area inside the ragged outline is the area to be used in the formula $D_{eq} = (4*A/\pi)^{1/2}$ for the equivalent diameter.

The outline cross-section of the core is taken where the core is widest.

The reactor core comprising graphite moderator elements may be surrounded by a reflector material where the reflector material may also be made of graphite. The core and the reflector material is placed in a reactor vessel that provides a mechanically structural material. When the reflector material is made with graphite, the reflector region is defined as having a low fraction volume-% value of the molten salt, such as less than 2.5 volume-%, such as 0.5 to 1.5 volume-%. The presence of a molten fuel salt in the reflector ensures a cooling of graphite in the reflector region.

The molten salt is capable of flowing in the interstices between the graphite moderator elements and the flow of the molten salt is provided by a molten salt pump that pumps the liquid molten salt around in a loop for molten salt circulation. Other elements than the reactor core in the loop is for example a heat exchanger for removing the produced heat in the molten salt from the fission process and off-gas systems.

The graphite moderator elements in the assembly are situated with interstices of a certain width between each other. An example of an assembly of moderator elements with a square cross section in a regular uniform pattern is given here: The elements are placed equidistant to each other, and the minimum distance being the width is found between the side of one element and the side of a neighbouring element, for all moderator elements. The distance between the corner of one element and the opposite corner of a neighbouring element is larger than the width by a factor of the square root of 2.

In one embodiment, the width of the interstices between neighbouring graphite moderator elements has a value in the interval between 4 mm and 15 mm, preferably a value in the interval between 5 mm and 10 mm, said value of the width is taken at the beginning of life (BOL) cycle.

The width is measured or calculated based on the graphite as expanded at the operational temperature of the reactor.

In one embodiment, the width is calculated based on the graphite as expanded at the operational temperature of the reactor and the value of the width is taken at the beginning of life (BOL) cycle.

The width of the interstices is taken at the beginning of life (BOL) cycle. This value is different than at the end-of-life cycle (EOL) because the graphite is undergoing irradiation damage which causes changes in the volume. The EOL point in time can be taken where the graphite has shrunk the most (the so-called turn around point). The EOL point in time can also be taken at the point later in time where the graphite has expanded and has regained its original volume it had at BOL (the so-called cross over point).

A molten fuel flow in the interstices between the graphite moderator elements is required for sufficient cooling of the graphite. The lifetime of the graphite depends strongly on temperature in combination with the neutron flux from fast neutrons and the graphite temperature should be cooled as much and as homogeneously as possible. It is known that a reactor core design with a very small interstice width, for example 2 mm may cause problems during the reactor lifetime due to e.g. pressure drops and assembly tolerances. This is because the width varies during the lifetime caused by the irradiation inducing graphite dimensional changes. The changes in interstice width induces reactivity changes and should be avoided. This is because the reactivity and especially the important negative reactivity coefficient for a reactor depends on the volume of fuel relative to the volume of moderator. Most of the volume in a molten salt reactor has to be occupied by graphite such as around 90% or more, depending on the composition of the molten salt to achieve a negative reactivity coefficient.

Calculations show that a reactor core design with a flat core, such as core with a breadth to height ratio of e.g. 2.0 to 6.0 results in a core where more salt volume can be present to achieve a target negative reactivity coefficient. This is compared to a conventional breadth to height ratio of around 1.0. The provisions of more salt volume and a larger interstitial width is less prone to variations in dimensions compared to a narrow width. Furthermore, the finding that a larger salt volume can be used, can also be used to use smaller dimensions of the graphite elements which provide more graphite surface area and a better cooling of the graphite that improves the graphite lifetime.

In one embodiment, the core height is a value in the interval of 0.7 m to 2 m, such as 1 m to 1.8 m.

In one embodiment, the core breadth is a value in the interval of 2 m to 10 m, such as 3 m to 8 m, such as 4 m to 7 m.

In one embodiment, the molten salt reactor has a thermal power output in the interval of 50 to 500 MW, such as 100 to 400 MW.

In one embodiment, the value of the width of a graphite moderator element taken perpendicular to the height of the graphite moderator element is in the interval of 6 to 28 cm, preferably 7 to 25 cm, preferably 8 to 20 cm, said value of the width is taken at the beginning of life (BOL) cycle.

The width of the graphite moderator element is taken at the beginning of life (BOL) cycle.

A small width of the graphite moderator element promotes a homogeneous cooling of the graphite element from the surrounding salt because the total surface area is larger when using smaller graphite moderator element widths for a given core breadth.

The width is defined for polygons as the extent from side to side of a cross section taken as the smaller extent in case several values are possible. For elliptical shapes the width is the minor axis and for circular shapes, the width is taken as the diameter.

Rectangle          Ellipse          Hexagon

Examples showing the width (thick line) for a rectangle, an ellipse and a hexagon shape of the cross section taken perpendicular to the height axis of a graphite moderator element.

In one embodiment, the graphite moderator element has a cross section taken perpendicular to the graphite moderator element with a shape selected from the group of a hexagon, a square, a rhombus, a rectangle, a parallelogram, a star shape with rounded corners, a circle.

In one embodiment, the graphite moderator element has a cross section taken perpendicular to an elongated graphite moderator element with a shape selected from the group of a hexagon, a square, a rhombus, a rectangle, a parallelogram, a star shape with rounded corners, a circle.

In one embodiment, the graphite moderator element has a cross section taken perpendicular to an elongated graphite moderator element with a shape containing at least one of hexagonal, square, rhombic, rectangular, parallelogrammical, star-shaped and/or circular features. Such shapes may be hexagons, squares, rhombuses, rectangles, parallelograms or star-shapes with rounded corners.

In one embodiment, at least one graphite moderator element is an elongated element provided with one or more channels, preferably with their channel axes along the direction of the elongation of the graphite moderator element.

The provision of a further conduit for the molten salt flow through the reactor core with a channel through the graphite moderator element may provide a more homogenous cooling than cooling only the outer surfaces of the graphite moderator elements. The channel in the graphite moderator element may have a round cross section centred around the centre of the graphite moderator element.

In one embodiment, the outer graphite moderator elements at the outline of the assembly are provided with a channel through which a molten salt is capable of flowing and the inner graphite moderator elements in the vicinity of the centre of the assembly are not provided with a channel.

In one embodiment, the outer graphite moderator elements at the outline of the assembly are provided with a channel with a diameter $D_1$ through which a molten salt is capable of flowing and the inner graphite moderator elements in the vicinity of the centre of the assembly are provided with a channel with a diameter $D_2$, wherein $D_1 > D_2$.

In a reactor core with a constant volume fraction of molten salt taken along the breadth of the core, the neutron flux is larger near the centre of the core. This is because the neutrons escape easier from the core in the regions in the outskirts of the reactor core than at the centre. An inhomogeneous neutron flux should be avoided because this induces an inhomogeneous structure in the graphite in the reactor core. The volume fraction of molten salt in the reactor core can be varied to compensate for this effect and obtain a more homogenous neutron flux. The provision of channels in the graphite moderator elements in the outskirts of the core or the provision of channels in the graphite moderator elements with different diameter of the channel cross section is a mechanically easy and robust way to provide this compensation of molten salt volume in the reactor core.

In one embodiment, the channels have a diameter in the interval of 10-70 mm, such as 20-50 mm.

In one embodiment, the molten salt has a composition selected from the group of compositions of:

sodium fluoride + potassium fluoride + uranium fluoride;
sodium fluoride + potassium fluoride + uranium fluoride + thorium fluoride;
sodium fluoride + potassium fluoride + fluorides of minor actinides;
lithium fluoride + thorium fluoride + plutonium fluoride;
lithium fluoride + thorium fluoride + uranium fluoride;
lithium fluoride + beryllium fluoride + uranium fluoride;
lithium fluoride + beryllium fluoride + fluorides of minor actinides;
lithium fluoride + beryllium fluoride + uranium fluoride + thorium fluoride; lithium fluoride + beryllium fluoride + uranium fluoride + thorium fluoride + zirconium fluoride;
sodium fluoride + rubidium fluoride + uranium fluoride; and sodium fluoride + beryllium fluoride + uranium fluoride + thorium fluoride + zirconium fluoride.

The above compositions will inevitably change their chemical composition during the operation of the molten salt reactor where fission events take place and new elements are formed. Some of the new elements are bound strongly by the fluoride in the salt composition and some gaseous elements like Xe and Kr will escape the molten salt. The above compositions are therefore to be understood as the composition at the reactor start-up. Some elements may be present as impurities in less than 0.2 vol.% of the total composition.

The molten salt comprises the fissile material and may also be referred to as the fuel salt or molten fuel salt. The fissile material may be a fluoride salt of a fissile isotope, such as U-235.

In one embodiment, the salt comprises uranium with U-235 in an enrichment level selected from the group of SEU (Slightly enriched uranium <2% U-235), LEU (Low-enriched uranium typically 3-5% U-235), HALEU (High-assay LEU 5-20% U-235) or even HEU (Highly enriched uranium, more than 20% U-235). In one embodiment, the salt comprises uranium with U-235 with an enrichment value in the interval of 2.0-4.0% U-235.

The fissile material may be a fluoride salt of minor actinides.

When the fissile material is a fluoride salt comprising a fissile isotope, this fluoride salt has a carrier salt which may be sodium fluoride + potassium fluoride, also termed FNaK or lithium fluoride + beryllium fluoride also termed FLiBe. The combination of the fissile material containing enriched uranium and the carrier salt FNaK is sometimes referred to as FUNaK.

In one embodiment, the molten salt comprises FLiBe as a carrier salt.

The FLiBe is particularly advantageous because it may provide a relativity high volume salt fraction in the core for a given negative reactivity coefficient and therefore a smaller graphite core and/or enabling a better cooling of the graphite giving rise to a graphite lifetime improvement.

In one embodiment, the molten salt comprises FNaK as a carrier salt. FNaK has the advantage that it is devoid of Li and Be. Li contains naturally 5 atomic-% of 6-Li which is a neutron absorber and Li must be enriched to almost pure 7-Li to be used in practice in a fission reactor. Most Be-compounds present a health concern and the production of Be is scarce. However, the choice of FNaK as a carrier salt is demanding for neutronics reasons and provide a relativity low volume salt fraction in the core for a given negative reactivity coefficient. This provides a relative low capability of cooling the graphite. But the flat core, such as core according to the invention with a breadth to height ratio of e.g. 2.0 to 6.0 enables that FUNaK can be used with the practical benefits mentioned above and a sufficient cooling of the graphite is possible for a commercially valuable lifetime.

In one embodiment, the molten salt does not comprise FLiBe as a carrier salt.

In one embodiment, the molten salt does not comprise thorium fluoride.

In one embodiment, the molten salt is free of Li and Be and the molten salt has a composition of: sodium fluoride + potassium fluoride + uranium fluoride, preferably in amounts corresponding to a eutectic composition taken at the beginning of life (BOL) cycle.

The uranium fluoride may include both $UF_3$ and $UF_4$.

In one embodiment, the thorium fluoride may include both $ThF_3$ and $ThF_4$.

In one embodiment, the fraction volume-% value of the molten salt in the core is in the interval of 4.5% to 13%, preferably 5.5% to 11.5%, said fraction volume-% is in relation to the total volume of molten salt and graphite moderator, said fraction volume-% value of the molten salt in the core is taken at the beginning of life (BOL) cycle.

The volume of the molten salt relative to the moderator material in the core is expressed as the fraction volume-% of the molten salt. This value is calculated as: $volume_{(molten\ salt)}*100\% / (volume_{(molten\ salt)} + volume_{(\ graphite\ moderator)})$. The calculation of the fraction volume-% may be done by way of example with a nominal graphite density of 1770 $kg/m^3$. In order to arrive at a fraction volume-% value for molten salts and graphites deviating from these nominal values, an amendment to the nominal value has to be made for such molten salts and graphites.

The fraction volume-% value of the molten salt in the core is taken at the beginning of life (BOL) cycle. The fraction volume-% of the molten salt must be fairly low to ensure a negative reactivity coefficient. A negative reactivity coefficient is crucial for the safety of any kind of nuclear fission reactor because a negative reactivity coefficient expresses that the reactivity decreases when temperature raises, thus creating negative feedback to a rise in temperature from increased fission events in the core. It is essential that the overall reactivity coefficient is designed to be negative for any operational scenario for the nuclear fission reactor when designing the reactor.

Some compositions of molten salts are able to meet the criterion of a negative reactivity coefficient with a higher volume-% than other compositions of molten salts. Using FLiBe as a carrier salt will in general provide a relatively high volume of salt in the core compared to salts having FNaK as a carrier salt. This may be seen as being detrimental in using FNaK despite its many advantages in terms of availability and lower health risks compared to e.g. the conventional FLiBe carrier salt. It shows however that for example the feature of the values of the ratio of the core breadth to the core height according to the invention enables more volume of molten salt to be present in the core compared to conventional values of the ratio of the core breadth to the core height around 1.0. This enables the use of FNaK carrier salts with improved cooling properties and thereby improved lifetime of the graphite moderator.

In one embodiment, the molten salt has the composition of sodium fluoride + potassium fluoride + uranium fluoride and the fraction volume-% value of the molten salt in the core is in the interval of 4.5% to 10%, preferably 5% to 8%, said fraction volume-% is in relation to the total volume of molten salt and graphite moderator.

In one embodiment, the ratio between the thermal energy output and the core volume is in the interval of 30 to 80 $MWy/m^3$, preferably 35 to 50 $MWy/m^3$.

The thermal energy output for a reactor can be stated as power x time duration and a conventional unit for the thermal energy output for nuclear reactors is megawatts x years, thus MWy. This is a convenient way of stating the energy output because it relates the nominal thermal power output with the reactor lifetime in years. The lifetime is estimated with the turnaround lifetime as the baseline for the values in the interval of 30 to 80 $MWy/m^3$, preferably 35 to 50 $MWy/m^3$.

The thermal energy output for a thermal molten salt reactor moderated with graphite can be related to the size of the graphite moderator volume. The volume of graphite moderator material that is needed to produce a certain energy throughout the reactor lifetime should preferably be minimised because of the costs of the nuclear grade graphite, the core size which again affects the shielding size and the issue of dealing with the irradiated graphite moderator waste when decommissioning the reactor.

It shows up that the feature of the values of the ratio of the core breadth to the core height according to the invention enables a higher output of energy for the same volume of graphite moderator compared to conventional values of the ratio of the core breadth to the core height around 1.0.

In one embodiment, the shape of the horizontal outline of the assembly of graphite moderator elements is selected from the group of a substantially circular shape, a substantially elliptical shape, a substantially annular shape or a substantially rectangular shape.

The graphite moderator elements which constitute the assembly of graphite moderator elements are conventionally having a polygon cross section shape, such as a hexagonal or square cross section shape. The assembly of e.g. columns of graphite moderator with a hexagonal cross section shape into a circle shape would therefore not have strictly circular outline because of the hexagon graphite columns having edges and not being rounded to fit the circular shape perfectly. Such a horizontal outline of the assembly of graphite moderator elements is therefore termed "a substantially circular shape". The shape of the outline may follow from the shape of the outline of the reactor vessel wherein the graphite moderator is contained in, where a substantially circular shape of the outline of the assembly may follow the circular shape of the outline of the reactor vessel.

A substantially annular shape of the horizontal outline of the assembly of graphite moderator elements may also follow the shape of an annular reactor vessel. Such as annular reactor vessel having a modified "donut" like shape can be an advantage if the molten salt reactor has the purpose of irradiating objects with neutrons where the objects can be located in the centre of the annular reactor vessel. Furthermore, annular shape could also provide a core with a lower power peaking.

In one embodiment, the graphite moderator elements are provided as one-piece graphite moderator elements.

The one-piece graphite moderator element may be fabricated as a one-piece graphite moderator element. The one-piece graphite moderator element may also be fabricated as a one-piece graphite moderator element and mechanically worked by cutting, grinding or drilling to the wanted shape. A one-piece graphite moderator element has the advantage that no joints between graphite moderator elements exist where the molten salt could penetrate into. The inclusions of such molten salt can cause hot spots because of stagnant fuel salt that results in fission where the heat is not properly transported away by the flow of molten salt.

In one embodiment, all the graphite moderator elements have the same size, or substantially the same height and width.

The graphite moderator elements have substantially the same height and width, if they have a maximum height and/or width deviation of less than 2% between the graphite moderator elements.

In one embodiment, the graphite moderator elements differ in size, preferably having a decreasing height starting from the elements at the core centre towards the elements at the outline of the core. The graphite moderator elements may differ in height so that the upper surface of the assembly of the graphite moderator elements has a uniform distance to a reactor vessel lid, preferably said lid being dome shaped.

In one embodiment, one or more guide tubes for control rods are provided, wherein the guide tubes are made of a material specified on the list of "ASME Boiling and Pressure Vessel Code (BPVC), Section III - Rules for Construction of Nuclear Facility Components, Division 5 - High Temperature Reactors, 2023", wherein said guide tubes are protruding into the reactor core from the top of the core and the guide tubes have an inner tube section inside the core, preferably the inner tube section length is substantially the same as the height of the reactor core. In one embodiment, the guide tubes are made of a material selected from the group of alloys of 304SS, 316SS, 800H, 2¼Cr-1Mo steel, 9Cr-1 Mo-V steel.

The guide tubes secure a precise insertion of the control rods which may be needed to be inserted quickly in case of an emergency reactor shut-down.

The provision of guide tubes is more feasible with a relatively low core height which is achievable with a ratio of the core breadth to the core height in the interval of 2.0 to 6.0, such as 2.2 to 5.5, such as 2.5 to 5.0, such as 2.8 to 4.0.

In one embodiment, the molten salt flow enters the bottom of the assembly of the graphite moderator elements and the flow direction in the core is in the opposite direction of the gravitational field, preferably the flow being in the laminar flow regime.

In one embodiment, the core is divided into more than one zone each having a zone volume, wherein each of zones have a fraction volume-% value of the molten salt different from one another, said fraction volume-% value being calculated with reference to the zone volume of the zone in question.

In one embodiment, the core is divided into more than one zone each having a zone volume, wherein a centre zone is located symmetrically around the centre line along the height direction of the core and one or more concentric zones are located concentrically around the centre zone, wherein each of the centre zone and the one or more concentric zones have a fraction volume-% value of the molten salt different from one another, said fraction volume-% value being calculated with reference to the zone volume of the zone in question.

The provision of zones with differing fraction volume-% value of the molten salt is a means to "flatten" the neutron flux variations in the reactor core so that no hot-spots occur in the core. This will help to prolong the graphite lifetime.

In one embodiment, the flow rate of the molten salt has the same value at all locations of the core. In one embodiment, the flow rate of the molten salt differs from one zone to another zone of the core.

In one embodiment, the fraction volume-% value of the molten salt in the core is uniform throughout the volume of the core.

In one embodiment, the core has no centre zone or concentric zones where the fraction volume-% value in one zone differs from another zone.

## Method of operating a molten salt reactor

In accordance with an aspect of the invention, there is provided a method of operating a molten salt reactor as outlined above.

All features disclosed for the molten salt reactor apply analogously for the method.

In one embodiment, there is a flow of molten salt through the reactor core and the flow is in the laminar flow regime.

A turbulent flow of the molten salt through the reactor core would in general be preferred although this requires a high flow velocity. But if the requirement of a turbulent flow is dispensed with then a laminar flow will result in a lower flow velocity which is less demanding for the molten fuel salt pump.

In one embodiment, there is a flow of molten salt through the reactor core and the flow is in the turbulent flow regime.

A turbulent flow of the molten salt through the reactor is preferred for a more efficient cooling of the graphite moderator elements although a turbulent flow may require a high flow velocity.

In one embodiment, the temperature of the bulk molten fuel salt is estimated or measured at the flow exit of the core and is less than the temperature of the surface wall graphite estimated or measured at the flow exit of the core by a value in the interval of 20°C to 90°C, preferably 30°C to 80°C.

**Nuclear power barge**

In accordance with an aspect of the invention, there is provided a nuclear power barge or nuclear fission propelled ship comprising a molten salt reactor as outlined above.

All features disclosed for the molten salt reactor apply analogously for the nuclear power barge.

In one embodiment, there is provided a nuclear power barge or a nuclear fission propelled ship comprising a molten salt reactor according to the invention.

There is a special attention to the amount of space a nuclear reactor takes up when using a nuclear reactor on a marine vessel such as a barge or a ship. The size of the reactor and especially the reactor core determines the volume and weight of the shielding constructions and other structures that are required for a nuclear reactor. For example, control rods must be able to be inserted from above in the full height of the core and must also be able to be fully retracted from the core, effectively at least doubling the height requirement for the core plus control rods. This height requirement further translates into an increased shielding structure size around the core and control rod housing and a further weight increase. A relatively flat reactor core saves space in the height direction not only due to the modest height of the reactor but also due to the control rods that are placed on top of the reactor core.

Brief description of the drawings

In the following the invention will be explained in greater detail with the aid of an example and with reference to the schematic drawings, in which:

Figure 1 shows a reactor core in perspective with an assembly of graphite moderator elements.
Figure 2 shows the reactor core of fig. 1 in a top view with a surrounding reactor vessel.
Figure 3 shows the temperature profile of the graphite and FUNaK molten fuel salt along the height of the reactor core (x-axis) for an embodiment of the invention.
Figure 4 shows the temperature profile of the graphite and FUNaK molten fuel salt along the height of the reactor core (x-axis) for a reference reactor core.
Figure 5 shows the temperature profile of the graphite and FLiBe + uranium fluoride molten fuel salt along the height of the reactor core (x-axis) for an embodiment of the invention.
Figure 6 shows the temperature profile of the graphite and FLiBe + uranium fluoride molten fuel salt along the height of the reactor core (x-axis) for a reference reactor core.

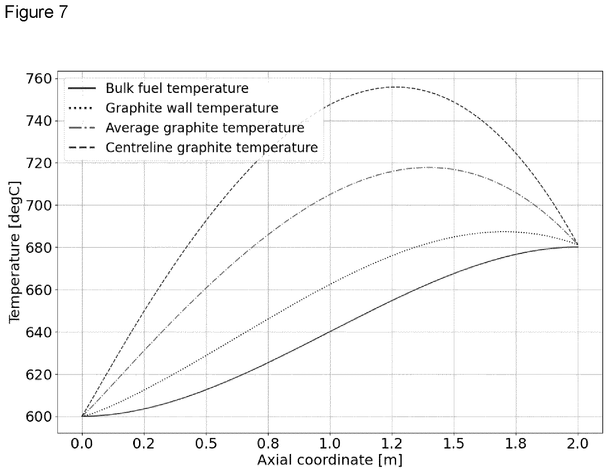

Figure 7 shows the temperature profile of the graphite and FUNaK molten fuel salt along the height of the reactor core (x-axis) for an embodiment of the invention with turbulent flow.
Figure 8 shows a molten salt reactor comprising a reactor core 1, a pipeline loop for the flow of the molten salt 11, a molten fuel salt pump 10 and a heat exchanger 12.

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

The term "comprising" as used in this specification and claims means "consisting at least in part of". When interpreting statements in this specification and claims which include the term "comprising", other features besides the features prefaced by this term in each statement can also be present. Related terms such as "comprise" and "comprised" are to be interpreted in a similar manner.

Detailed Description

The invention will now be illustrated in the following non-limiting examples.

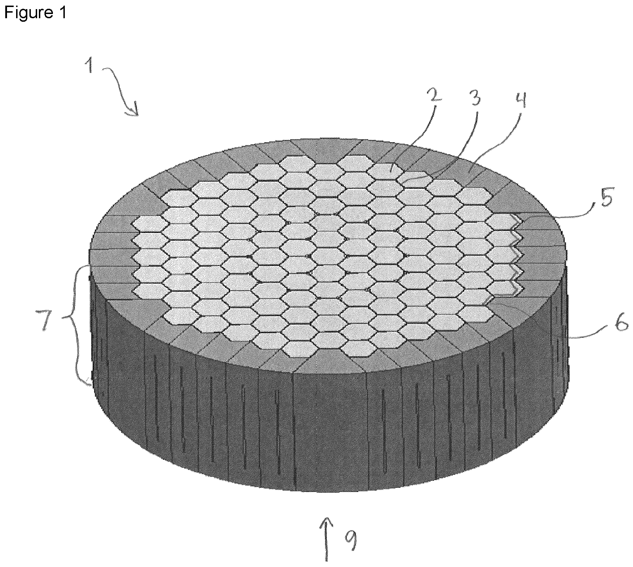

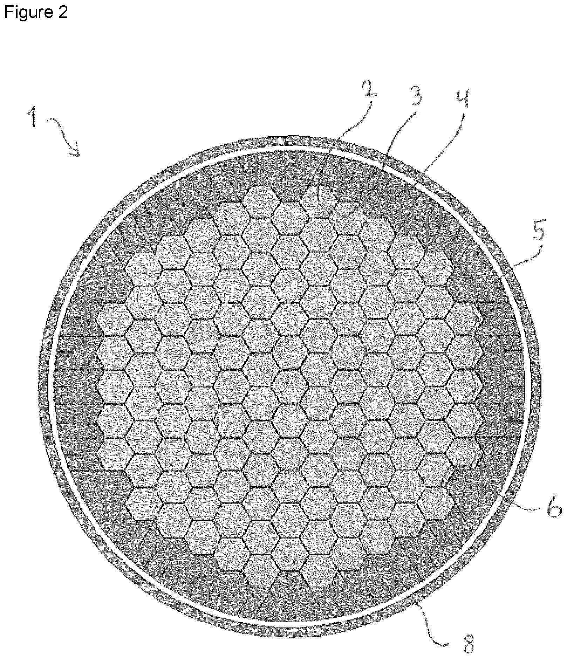

An example of a reactor core according to the invention is seen in fig. 1 and fig. 2. The outline of the reactor core is defined by the boundary between the light-shaded graphite moderator elements and the dark-shaded graphite reflector elements. The outline has a jagged appearance and is defined by 6x5 graphite moderator elements illustrated with fig. numeral 5 plus six graphite moderator elements illustrated with fig. numeral 6. The sides of these 36 graphite moderator elements 5 and 6 facing the graphite reflector elements 4 forms a closed outline that defines the outline of the exemplified reactor core in fig. 1 and fig. 2. This outline has a substantially hexagonal shape. The width 3 of the interstices between two neighbouring graphite moderator elements is shown as the width between two sides of hexagon shaped graphite moderator elements 2. The equivalent diameter of the outline of the assembly of graphite moderator elements is calculated as $D_{eq} = (4*A/\pi)^{1/2}$, where A is the cross-sectional area of the light shaded graphite moderator elements including interstices between them shown in fig. 1 and fig. 2. The area A can be calculated as the sum of the area of the 121 light-shaded graphite moderator elements with a hexagonal cross-section seen in fig. 1 and 2 plus the width of the interstices between these 121 graphite moderator elements. A calculation using an exemplified width of 32 cm of a graphite moderator element and an interstice width of 0.5 cm gives a result of $D_{eq} = (4*A/\pi)^{1/2} = (4*121*[(3*3^{1/2}*(32.5cm*\tan(30))^2/2])/\pi)^{1/2} = (4*121*914cm^2/\pi)^{1/2} = 375cm = 3.75m$, which is defined as the core breadth. The height 7 is exemplified in the fig. 1 as 1.5 m. Thus, the ratio of the core breadth to the core height has a value of 3.75/1.5 = 2.5.

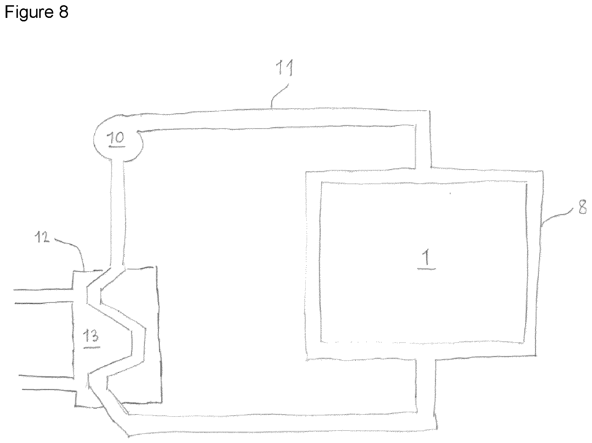

The core is seen in fig. 2 from above as located in a reactor vessel 8. The reactor vessel is part of the constructional elements of the molten salt reactor surrounding the reactor core. The other elements of a molten salt reactor are not shown in fig. 1 and 2 and these elements are for example an upper and lower lid connected to the reactor vessel and piping to/from the upper and lower lid forming a loop for the molten fuel salt flow. The flow direction is indicated by the arrow 9 showing an upward flow in the opposite direction of the gravitational field. Furthermore, the molten salt reactor comprises a molten fuel salt pump for pumping the molten fuel salt around in the loop, a heat exchanger for transferring the heat created in the molten fuel salt by the fission process in the reactor core to another medium such as another heat transfer salt. An example of a molten salt reactor showing the above elements is seen in fig. 8.

**Example 1**

**FUNaK molten fuel salt, laminar flow**

In this example and the other examples in the Detailed Description, a reactor core design was analysed via a methodology comprising of high-fidelity Monte Carlo neutronics, and thermal hydraulics analysis based on the theoretical model presented in Di Marcello, V., Cammi, A. & Luzzi, L. A generalized approach to heat transfer in pipe flow with internal heat generation. Chemical Engineering Science 65, 1301-1310 (2010). For the purposes of the Examples, the model of Di Marcello et al. was adapted from a channel model to an insterstice. This multiphysics methodology was complemented by a graphite lifetime estimator tool employing IG-110 graphite data from T. Shibata, K. Sawa, M. Eto, E. Kunimoto, S. Shiozawa, T. Oku, T. Maruyama, Draft of standard for graphite core components in high temperature gas-cooled reactor, Technical Report JAEA-Research-2009-042, JAEA, 2009. Thermal conductivity of irradiated, not fresh graphite was used. With this tool, the graphite lifetime was calculated as $F(T) / \Phi$, where $F(T)$ is the turnaround fluence F dependent on local temperature and $\Phi$ is the local fast flux (>100 keV). This is a conventional approach, similar methodology used e.g. in Zhu G, Guo W, Kang X, et al. Neutronic effect of graphite dimensional change in a small modular molten salt reactor. Int J Energy Res. 2021; 45: 11976-11991 and Wang Y, Guo W, Zhu G-F, et al. A new structure design to extend graphite assembly lifespan in small modular molten salt reactors. Int J Energy Res. 2021; 45: 12247-12257. The chief difference between the methodology used here and in these two references is the use of the above-mentioned solver for thermal hydraulics based on the theory from Di Marcello et al.

Due to the symmetry of the core used in the embodiments, the lifetime was evaluated in the centre of the core, where the graphite suffers from the maximum irradiation and the temperature is the highest. Furthermore, for thermal-hydraulics model, the corresponding analysis was done for the radially-central "flow channel" of the core, typically termed "hot channel". Note that "hot channel" is not a physical channel through the graphite in the core but rather an established technical term in nuclear reactor thermal hydraulics. Also note that due to power peaking in the symmetric reactor, the hot channel fuel salt temperature rise across the core is 80 degrees Celsius and not 50 degrees Celsius, which is the average temperature rise for the fuel salt flowing through the core.

A reactor core illustrating the reactor core of this Example is seen from the top in fig. 2 although with other specific design parameters such as the breadth and height. The reactor core has a uniform arrangement of the graphite moderator elements all having the same size and the same value for the interstices between them and with a uniform flow rate of the molten salt. A difference between the illustrated uniform arrangement of the graphite moderator elements to the core used for the calculation is that the outermost elements in the periphery of the core are cut to shape so that they fit within the circular cross-section used for the calculations.

The design parameters for the analysis and simulation are given in Table 1, Example 1 for a reactor core having a ratio of the core breadth to the core height of 5.66m:2m = 2.83 and supplemented with the following parameters:

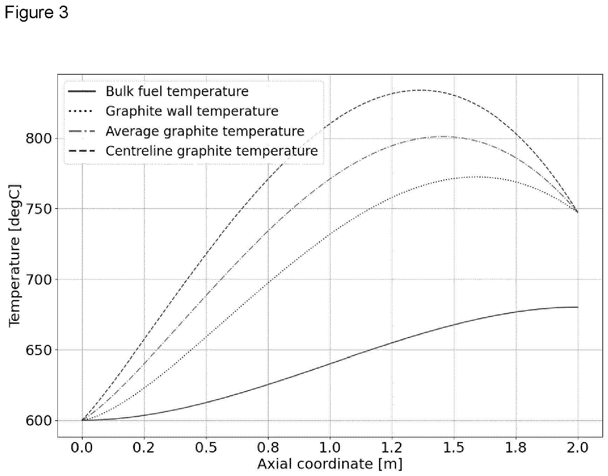

- Reflector thickness was 30 cm.
- Reflector: Homogeneous mixture of fuel salt and moderator assuming a moderator-to-fuel ratio of 50 corresponding to a fraction volume-% value of the molten salt of 1.96% (BOL).
- Thermal power output was 250 MW.
- No inclusion of control rods and control rod guide tubes.
- Temperature increase of the molten fuel salt from entrance to exit of the reactor core of 50°C, thus for the average channel. Note: the temperature profiles shown in figs. 3-6 are for the "hot channel", see an explanation for the hot channel above.
- Vessel thickness: 0.11 m.
- Moderator: IG-110 graphite with 21% porosity.

The molten fuel salt flow was in a direction upwards, and the molten fuel salt was flowing in the interstices between the outer surfaces of the graphite moderator elements. Each graphite moderator element had the same size and had a column shape with its long axis in the vertical direction and with a hexagonal cross section shape as illustrated in fig. 1 and fig. 2.

The key performance characteristics and parameters of the design is seen in Table 1 (all results stated with a beginning of life (BOL) fuel composition and layout.

The temperature profile in the hot channel is shown in fig. 3. The "Graphite wall temperature" is the temperature of the graphite at the surface wall facing the molten salt. The hot channel (the central channel) is the unit of the core used for the simulations.

A reference core design to the design of Example 1 was also simulated with design parameters given in Table 1, "Ref. Example 1" for a reactor core having a ratio of the core breadth to the core height of 4m:4m = 1.0, thus a conventional value of the ratio of the core dimensions and other specifications stated in Table 1. All other design parameters were the same as for Example 1. Most notably, both the core in Example 1 and the Ref. Example 1 were simulated with the requirement of having the same power output, core volume, salt composition, fuel salt volume fraction, fuel salt flow rate.

When comparing the cores of Example 1 with Ref. Example 1, it is seen that the graphite lifetime is better for Example 1 of the invention than for the conventional core dimensions of Ref. Example 1. The lifetime is stated as the time it takes for the graphite to shrink to its lowest size caused by irradiation, the "turnaround time". Even though the graphite moderator volume is the same for Example 1 and Ref. Example 1 and the power output is the same the graphite lifetime and thus the reactor lifetime is longer for the core in Example 1. Another difference between the two cores is that the flow regime is in the laminar or transitional regime for the core in Example 1 with a low Reynolds no. of 2600 but not the turbulent flow regime. This is to be compared to Ref. Example 1 which has a high Reynolds no. of 10400, thus indicating a turbulent flow. All stated Reynolds numbers in this Example and other Examples are approximate values. It is remarkable that the core of Example 1 has a longer lifetime even though it is only cooled with a laminar flow of molten fuel salt which is known to provide less heat transfer than a turbulent flow. The enrichment level needed for the core of Example 1 is admittedly higher than for the Ref. Example 1, but this trade-off is more than compensated by a longer lifetime, a better temperature reactivity coefficient, a low height of 2 m thereby avoiding connection of several graphite moderator elements in the height direction, a considerable shorter control rod length and lower control rod housing. The Example 1 shows that the use of FUNaK (sodium fluoride + potassium fluoride + uranium fluoride) is indeed possible and the design has a sufficiently low negative value of the temperature reactivity coefficient as required for safety purposed when comparing to a reactor core with conventional dimensions as in Ref. Example 1. Also, the fraction vol.% could be increased to enable the use of less graphite, better cooling, better lifetime at the cost of a slightly less negative temperature reactivity coefficient.

## Example 2

### FLiBe + uranium fluoride molten fuel salt, laminar flow

In this example, another fuel salt composition was investigated than the FUNaK composition of Example 1 and Ref. Example 1, namely a FLiBe + uranium fluoride composition. The design parameters for Example 2 and Ref. Example 2 are seen in Table 1 and the remaining design parameters were the same as stated above for Example 1.

When comparing Example 2 with Example 1, it can be seen that the neutronically favourable FLiBe carrier salt composition enables a higher volume of salt to be used, shown in the fraction volume-% value of the molten salt being 9.85% when using FLiBe + uranium fluoride compared to 5.88% when using FUNaK. This higher value of salt volume percentage enables graphite moderator elements with a smaller dimension to be used, enabling better cooling of the graphite which in turn enables an even better improvement in lifetime of the graphite as seen in the turnaround lifetime. The lifetime is 9 years when using FLiBe + uranium fluoride compared to 7 years when using FUNaK, comparing Example 2 with Example 1, respectively. Also, the flow rate is remarkably lower when using FLiBe + uranium fluoride in Example 2 than when using FUNaK which lowers the requirements to the molten fuel salt pump. Similar for the comparison between Example 1 and Ref. Example 1, the flow regime is laminar for the core in Example 2 with a low Reynolds no. of 1600 compared to Ref. Example 2 which has a high Reynolds no. of 11000, indicating a turbulent flow.

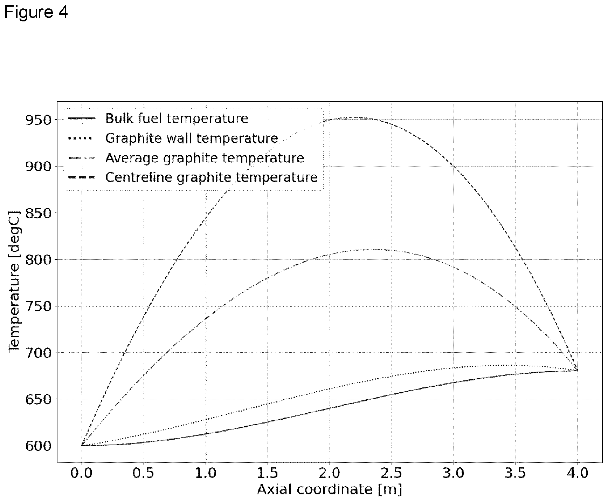

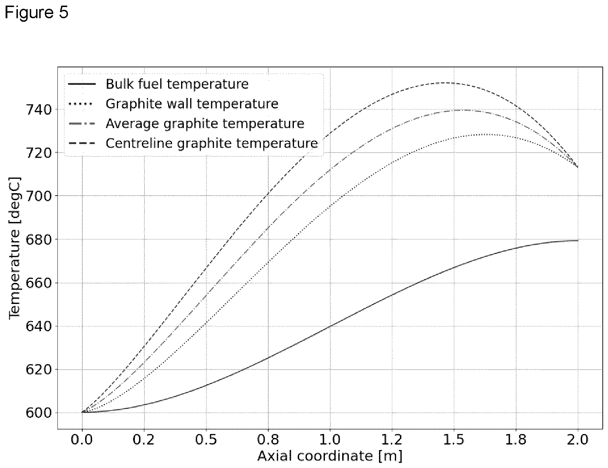

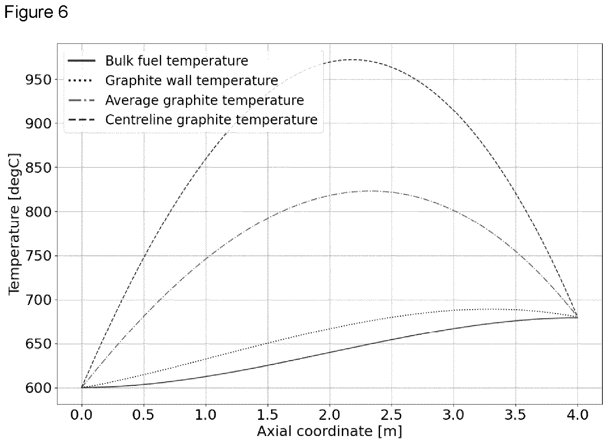

For both Example 1 and Example 2, it can be seen by comparison of fig. 3 and fig. 5 that the temperature of the bulk molten fuel salt is lower than the temperature of the graphite at the flow exit of the core at the 2.0 m mark. The difference is approximately 70°C for Example 1 and 35°C for Example 2. This temperature difference is not seen for the conventional reactor core dimensions in Ref. Example 1 and Ref. Example 2 by comparison with fig. 4 and 6, respectively. This temperature difference is caused by the influence of the thermal entrance length size and the fact that the cores of Examples 1 and 2 have a value of the core height that is lower than the entrance length whereas in the Ref. Example 1 and Ref. Example 2 the flow is turbulent from the outset.

The thermal entrance length only matters for a laminar flow so there is no difference in temperatures at the exit of the core for turbulent flow regime.

In general, for all four temperature profiles for Example 1, Example 2, Ref. Example 1 and Ref. Example 2, it is seen that the temperature raises in the fuel salt and the graphite going from the entrance at axial coordinate 0.0 m towards the exit of the molten fuel salt flow but that the graphite temperature peaks inside the reactor and declines towards reaching the exit of the core. The decline in temperature near the exit is caused by a lower neutron flux near the top surface of the reactor core where the molten salt exits and thereby less fission events taking place. The decrease in neutrons near the top surface is due to more neutrons being able to escape the core. The temperature decline is an effect of the cooling of the molten salt. Even though the graphite is not cooled to the same low temperature as the molten salt when exiting the core for Example 1 and Example 2, the maximum reached temperature of the graphite is lower than for Ref. Example 1 and Ref. Example 2 and the maximum graphite temperature combined with the fast neutron flux strongly impacts the graphite lifetime.

The temperature peaking of the graphite does not take place near the centre of the graphite core but higher up along the axial axis along the flow direction that for the conventional cores of Ref. Example 1 and Ref. Example 2. The fact that the temperature peak and flux peak is not at the same place is beneficial for obtaining a longer graphite lifetime.

**Example 3**

**FUNaK molten fuel salt, turbulent flow**

In this example, the Example 1 was re-done with a calculation for a turbulent flow regime instead of a laminar flow as in Example 1. Thus, Example 1 and Example 3 are the same with the notable difference that the calculation assume they perform in the laminar and the turbulent flow regime, respectively. It is fully justified to consider both cases of flow regime because the Reynolds number of 2600 denotes an intermediate flow regime with both laminar and turbulent flow characteristics. The lifetime is 9.5 years for the design in the turbulent regime and even better than the 7.5 years of Example 1 where a laminar flow design is calculated for. Both the lifetime of Example 1 and Example 3 are better than the lifetime of 7 years for the conventional design of Ref. Example 1 showing again the influence of the ratio of the core height to the core breadth on the graphite lifetime.

The design parameters and results for Example 3 are seen in Table 1 and the remaining design parameters were the same as stated above for Example 1.

Table 1

| | Salt composition | Core height [m] | Core diameter (excl. reflector) [m] | Core diameter (w/ reflector) [m] | Flow rate [kg/s] | fraction volume-% value of the molten salt | Moderator element width [cm] | interstice width [cm] | Reynolds number [-] | Enrichment [%] | Temperature reactivity coeff. [pcm/K] | Turnaround lifetime [y] | Flow regime [-] |
|---|---|---|---|---|---|---|---|---|---|---|---|---|---|
| Ex. 1 | FUNaK | 2 | 5.66 | 6.26 | 5500 | 5.88% | 16.25 | 0.5 | 2600 | 2.45 | -4.7 | 7.5 | Laminar/ Transitional |
| Ref. Ex. 1 | FUNaK | 4 | 4 | 4.6 | 5500 | 5.88% | 32.5 | 1 | 10400 | 1.85 | -3.3 | 7 | Turbulent |
| Ex. 2 | FLiBe + uranium fluoride | 2 | 5.66 | 6.26 | 3800 | 9.85% | 10.4 | 0.5 | 1600 | 2.3 | -6.4 | 9 | Laminar |
| Ref. Ex. 2 | FLiBe + uranium fluoride | 4 | 4 | 4.6 | 3800 | 9.85% | 35.3 | 1.7 | 11000 | 1.35 | -4.6 | 8 | Turbulent |
| Ex. 3 | FUNaK | 2 | 5.66 | 6.26 | 5500 | 5.88% | 16.25 | 0.5 | 2600 | 2.45 | -4.7 | 9.5 | Transitional turbulent |

Reference signs list

1 The reactor core
2 A cross-section of a graphite moderator element
3 An interstice between two neighbouring graphite moderator elements
4 A graphite reflector element
5 A side of five graphite moderator elements facing the graphite reflector elements
6 A side of one graphite moderator element facing the graphite reflector elements
7 The height of the core
8 The reactor vessel
9 The molten salt flow direction
10 A molten fuel salt pump
11 A loop for molten fuel salt
12 A heat exchanger
13 A heat transfer salt

**Claims**

1. A molten salt reactor comprising a core comprising an assembly of graphite moderator elements, the core dimensions are defined by:

   - the core height (7), defined as the height of the assembly of the graphite moderator elements, and
   - the core breadth, defined as the equivalent diameter of the outline of the assembly of graphite moderator elements taken perpendicular to the height direction, and
   - the ratio of the core breadth to the core height has a value in the interval of 2.0 to 6.0, such as 2.2 to 5.5, such as 2.5 to 5.0, such as 2.8 to 4.0,
   and wherein the assembly of the graphite moderator elements comprises graphite moderator elements arranged with interstices between the outer surfaces of the graphite moderator elements,
   and wherein a molten salt is capable of flowing between the outer surfaces of the graphite moderator elements.

2. A molten salt reactor according to claim 1, wherein the width of the interstices between neighbouring graphite moderator elements (3) has a value in the interval between 4 mm and 15 mm, preferably a value in the interval between 5 mm and 10 mm, said value of the width is taken at the beginning of life (BOL) cycle.

3. A molten salt reactor according to claim 1 or 2, wherein the value of the width of a graphite moderator element taken perpendicular to the height of the graphite moderator element is in the interval of 6 to 28 cm, preferably 7 to 25 cm, preferably 8 to 20 cm, said value of the width is taken at the beginning of life (BOL) cycle.

4. A molten salt reactor according to any one of the above claims, wherein at least one graphite moderator element is an elongated element provided with one or more channels, preferably with their channel axes along the direction of the elongation of the graphite moderator element.

5. A molten salt reactor according to any one of the above claims, wherein the molten salt has a composition selected from the group of compositions of:

   sodium fluoride + potassium fluoride + uranium fluoride;
   sodium fluoride + potassium fluoride + uranium fluoride + thorium fluoride;
   sodium fluoride + potassium fluoride + fluorides of minor actinides;
   lithium fluoride + thorium fluoride + plutonium fluoride;
   lithium fluoride + thorium fluoride + uranium fluoride;
   lithium fluoride + beryllium fluoride + uranium fluoride;
   lithium fluoride + beryllium fluoride + fluorides of minor actinides;
   lithium fluoride + beryllium fluoride + uranium fluoride + thorium fluoride;
   lithium fluoride + beryllium fluoride + uranium fluoride + thorium fluoride + zirconium fluoride;
   sodium fluoride + rubidium fluoride + uranium fluoride; and

sodium fluoride + beryllium fluoride + uranium fluoride + thorium fluoride + zirconium fluoride.

6.  A molten salt reactor according to any one of the above claims, wherein the fraction volume-% value of the molten salt in the core (1) is in the interval of 4.5% to 13%, preferably 5.5% to 11.5%, said fraction volume-% is in relation to the total volume of molten salt and graphite moderator, said fraction volume-% value of the molten salt in the core (1) is taken at the beginning of life (BOL) cycle.

7.  A molten salt reactor according to any one of the above claims, wherein the ratio between the thermal energy output and the core volume is in the interval of 30 to 80 MWy/m$^3$, preferably 35 to 50 MWy/m$^3$.

8.  A molten salt reactor according to any one of the above claims, wherein the graphite moderator element has a cross section taken perpendicular to the graphite moderator element with a shape selected from the group of a hexagon, a square, a rhombus, a rectangle, a parallelogram, a star shape with rounded corners, a circle.

9.  A molten salt reactor according to any one of the above claims, wherein the graphite moderator elements are provided as one-piece graphite moderator elements.

10. A molten salt reactor according to any one of the above claims, wherein the molten salt flow enters the bottom of the assembly of the graphite moderator elements and the flow direction in the core (1) is in the opposite direction of the gravitational field, preferably the flow being in the laminar flow regime.

11. A molten salt reactor according to any one of the above claims, wherein, the core is divided into more than one zone each having a zone volume, wherein each of zones have a fraction volume-% value of the molten salt different from one another, said fraction volume-% value being calculated with reference to the zone volume of the zone in question.

12. A method of operating a molten salt reactor according to any of claims 1 to 11.

13. A method of operating a molten salt reactor according claim 12, wherein there is a flow of molten salt through the reactor core (1) and the flow is in the laminar flow regime.

14. A method of operating a molten salt reactor according claim 12, wherein there is a flow of molten salt through the reactor core (1) and the flow is in the turbulent flow regime.

15. A method of operating a molten salt reactor according to any one of claims 12 to 14, wherein the temperature of the bulk molten fuel salt is estimated or measured at the flow exit of the core and is less than the temperature of the surface wall graphite estimated or measured at the flow exit of the core by a value in the interval of 20°C to 90°C, preferably 30°C to 80°C.

16. A nuclear power barge or a nuclear fission propelled ship comprising a molten salt reactor according to any one of claims 1 to 11.

Figure 1

Figure 2

Figure 3

Figure 4

Figure 5

Figure 6

Figure 7

Figure 8

# EUROPEAN SEARCH REPORT

**Application Number**

EP 25 15 1350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 108 198 635 B (SHANGHAI INST APPLIED PHYSICS CAS) 30 July 2019 (2019-07-30) * the whole document * | 1-16 | INV. G21C1/22 G21C3/54 |
| A | KHAKIM AZIZUL ET AL: "The effect B impurity and Xe intrusion in the graphite moderator on void reactivity feedback of thermal MSR", NUCLEAR ENGINEERING AND DESIGN, AMSTERDAM, NL, vol. 414, 15 September 2023 (2023-09-15), XP087435658, ISSN: 0029-5493, DOI: 10.1016/J.NUCENGDES.2023.112592 [retrieved on 2023-09-15] * the whole document * | 1-16 | ADD. G21C11/06 |
| A | US 2015/228363 A1 (DEWAN LESLIE C [US] ET AL) 13 August 2015 (2015-08-13) * the whole document * | 1-16 | |
| A | US 11 075 015 B2 (TERRAPOWER LLC [US]) 27 July 2021 (2021-07-27) * the whole document * | 1-16 | TECHNICAL FIELDS SEARCHED (IPC) G21C |
| A | CN 111 627 570 B (SHANGHAI INST APPLIED PHYSICS CAS) 21 June 2022 (2022-06-21) * abstract; figures * | 1-16 | |
| A | CN 112 863 725 B (SHANGHAI INST APPLIED PHYSICS CAS) 9 December 2022 (2022-12-09) * abstract; figures * | 1-16 | |
| A | CN 108 389 632 B (SHANGHAI INST APPLIED PHYSICS CAS) 15 October 2019 (2019-10-15) * abstract; figures * | 1-16 | |

The present search report has been drawn up for all claims

| Place of search | Date of completion of the search | Examiner |
|---|---|---|
| Munich | 23 June 2025 | Opitz-Coutureau, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1350

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | | | Publication date | Patent family member(s) | | Publication date |
|---|---|---|---|---|---|---|
| CN 108198635 | B | | 30-07-2019 | NONE | | |
| US 2015228363 | A1 | | 13-08-2015 | CA | 2883966 A1 | 13-03-2014 |
| | | | | EP | 2893537 A2 | 15-07-2015 |
| | | | | SG | 11201501621W A | 29-04-2015 |
| | | | | US | 2015228363 A1 | 13-08-2015 |
| | | | | WO | 2014039641 A2 | 13-03-2014 |
| US 11075015 | B2 | | 27-07-2021 | CA | 3092142 A1 | 28-11-2019 |
| | | | | EP | 3766081 A2 | 20-01-2021 |
| | | | | EP | 4297043 A2 | 27-12-2023 |
| | | | | US | 2020027590 A1 | 23-01-2020 |
| | | | | US | 2021343431 A1 | 04-11-2021 |
| | | | | WO | 2019226218 A2 | 28-11-2019 |
| CN 111627570 | B | | 21-06-2022 | NONE | | |
| CN 112863725 | B | | 09-12-2022 | NONE | | |
| CN 108389632 | B | | 15-10-2019 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HAUBENREICH et al.** EXPERIENCE WITH THE MOLTEN-SALT REACTOR EXPERIMENT. *NUCLEAR APPLICATIONS & TECHNOLOGY*, February 1970, vol. 8
- **MITACHI et al.** Three Region Core Design for 200 MW electric Molten Salt Reactor with Thorium Uranium Fuel. *NUCLEAR TECHNOLOGY*, June 2007, vol. 158
- **WANG et al.** A new structure design to extend graphite assembly lifespan in small modular molten salt reactors. *Int J Energy Res.*, 2021, vol. 45, 12247-12257

- **DI MARCELLO, V.** ; **CAMMI, A.** ; **LUZZI, L.** A generalized approach to heat transfer in pipe flow with internal heat generation.. *Chemical Engineering Science*, 2010, vol. 65, 1301-1310
- **ZHU G** ; **GUO W** ; **KANG X et al.** *Int J Energy Res.*, 2021, vol. 45, 11976-11991
- **WANG Y** ; **GUO W** ; **ZHU G-F et al.** A new structure design to extend graphite assembly lifespan in small modular molten salt reactors.. *Int J Energy Res.*, 2021, vol. 45, 12247-12257